**Europäisches Patentamt**

**European Patent Office**

**Office européen des brevets**

(19)

(11) Veröffentlichungsnummer: **0 111 029**
**A1**

## (12) EUROPÄISCHE PATENTANMELDUNG

(21) Anmeldenummer: **82111542.5**

(22) Anmeldetag: **13.12.82**

(51) Int. Cl.³: **F 24 H 1/18**
**F 24 D 17/00, F 24 D 19/10**

(43) Veröffentlichungstag der Anmeldung:
**20.06.84 Patentblatt 84/25**

(84) Benannte Vertragsstaaten:
**AT BE CH FR GB IT LI LU NL SE**

(71) Anmelder: **Blum, Walter, Dr.**
**Les Hutins de Veraz**
**F-01170 Veraz sur Gex Ain(FR)**

(72) Erfinder: **Blum, Walter, Dr.**
**Les Hutins de Veraz**
**F-01170 Veraz sur Gex Ain(FR)**

(74) Vertreter: **Bott-Bodenhausen, Manno, Dr.**
**Maximilianstrasse 43**
**D-8000 München 22(DE)**

(54) Verfahren und Einrichtung zum Erwärmen und Speichern einer Flüssigkeit.

㊲ Verfahren zum Erwärmen und Speichern einer Flüssigkeit, insbesondere von Brauchwasser, bei dem die Flüssigkeit erwärmt sowie in einem ersten Speicherbehälter (1) gespeichert wird, dem sie bei Bedarf entnommen wird, wobei die Flüssigkeit wärmeleitungsmäßig von sich in dem ersten Speicherbehälter befindender Flüssigkeit getrennt erwärmt und zur Speicherung dem ersten Speicherbehälter nur dann zugeführt wird, wenn ihre Erwärmungstemperatur mindestens gleich einer ersten Solltemperatur ist. Bei einer Einrichtung zum Erwärmen und Speichern einer Flüssigkeit, mit einer Heizeinrichtung (7) und einem ersten Speicherbehälter (1), in dem die durch die Heizeinrichtung auf eine vorbestimmte Temperatur erwärmbare Flüssigkeit speicherbar ist und dem die gespeicherte Flüssigkeit bei Bedarf entnehmbar ist, ist die Heizeinrichtung von im ersten Speicherbehälter gespeicherter Flüssigkeit wärmemäßig isoliert, wobei die zu erwärmende Flüssigkeit der Heizeinrichtung zuführbar und von dieser in den ersten Speicherbehälter zur Speicherung nur dann abgebbar ist, wenn ihre Erwärmungstemperatur mindestens gleich einer ersten Solltemperatur ist.

Fig.1

EP 0 111 029 A1

Beschreibung

Die Erfindung betrifft ein Verfahren und eine Einrichtung
zum Erwärmen und Speichern einer Flüssigkeit gemäß den
Oberbegriffen der Ansprüche 1 und 6.

Herkömmlicherweise wird, wenn eine Flüssigkeit erwärmt und
gespeichert werden soll, diese Flüssigkeit in einen Speicherbehälter eingebracht, in dem sich eine Heizeinrichtung befindet. Durch Einschalten der Heizeinrichtung während einer
gewissen Zeitdauer wird die Flüssigkeit in dem Speicherbehälter
erwärmt. Ein solcher Speicherbehälter weist üblicherweise eine
in ihm mündende Zulaufleitung und Auslaufleitung auf. In der
Auslaufleitung ist ein Schieber angeordnet, welcher geöffnet
werden kann, um bei Bedarf dem Speicherbehälter erwärmte
Flüssigkeit entnehmen zu können. Wenn der Schieber in der Auslaufleitung geöffnet wird, um dem Speicherbehälter eine gewisse
Flüssigkeitsmenge entnehmen zu können, läuft die gleiche Flüssigkeitsmenge durch die Zulaufleitung in den Speicherbehälter, so
daß infolgedessen die im Speicherbehälter gespeicherte Flüssigkeitsmenge konstant gehalten wird.

Es sei angenommen, daß dem Speicherbehälter die Hälfte der
gespeicherten Flüssigkeit entnommen wird, welche auf eine vorbestimmte Temperatur erwärmt worden war. Da die dem Speicherbehälter zugeführte Flüssigkeitsmenge genau so groß ist, wie
die entnommene, besteht die nun im Speicherbehälter gespeicherte
Flüssigkeitsmenge zur Hälfte aus der bereits erwärmten Flüssigkeit und zur Hälfte aus der nachgelaufenen Flüssigkeit. Da
üblicherweise die Temperatur der nachgelaufenen Flüssigkeit
kleiner als die der gespeicherten Flüssigkeit ist, nimmt die sich nun im Speicherbehälter befindende Flüssigkeit eine
Mischtemperatur an, deren Höhe von der Temperatur der nachgelaufenen Flüssigkeit und der Erwärmungstemperatur der bereits
erwärmten Flüssigkeit abhängt. Dies hat zur Folge, daß, wenn
die sich im Speicherbehälter befindende Flüssigkeit auf eine
vorbestimmte Temperatur erwärmt worden war, Flüssigkeit mit
dieser Temperatur dem Speicherbehälter ohne zusätzliches
Aufheizen nur solange entnommen werden kann, solange keine
Durchmischung der sich im Speicherbehälter befindenden Flüssigkeit mit nachlaufender Flüssigkeit eingetreten ist. Dies ist
nur möglich, nachdem die gesamte Flüssigkeitsmenge im Speicherbehälter auf die vorbestimmte Temperatur erwärmt worden war.
Wenn zu einem ersten Zeitpunkt Flüssigkeit dem Speicherbehälter
entnommen wird, so weist die zu einem späteren Zeitpunkt entnommene Flüssigkeit eine tiefere Temperatur auf. Dies ist dann
von Nachteil, wenn einerseits über einen möglichst langen Zeitraum Flüssigkeit mit der vorbestimmten Temperatur zur Verfügung
stehen soll und andererseits nicht fortlaufend ausreichend
Energie für die Heizeinrichtung bereit gestellt werden kann
oder verfügbare Energie nur zu bestimmten Zeiten eingesetzt
werden soll. Der erste Fall, daß eine ausreichende Energie
für die Heizeinrichtung nicht fortlaufend bereitgestellt werden
kann, liegt dann vor, wenn als Energie für die Heizeinrichtung
Sonnenenergie eingesetzt werden soll. Der zweite Fall liegt
beispielsweise dann vor, wenn elektrische Energie für die Heizeinrichtung nur zu bestimmten Zeiten verwandt werden soll,
beispielsweise nur nachts, wenn der Stromtarif günstiger ist.

Der Erfindung liegt die Aufgabe zugrunde, ein Verfahren und
eine Vorrichtung der Gattung, wie sie in den Oberbegriffen
der Ansprüche 1 bzw. 6 angegeben sind, derart weiterzubilden,

6. Einrichtung zum Erwärmen und Speichern einer Flüssigkeit, mit einer Heizeinrichtung und einem ersten Speicherbehälter, in dem die durch die     Heizeinrichtung auf eine vorbestimmte Temperatur erwärmbare Flüssigkeit speicherbar ist und dem die gespeicherte Flüssigkeit bei Bedarf entnehmbar ist, insbesondere zur Durchführung des Verfahrens nach einem der vorhergehenden Ansprüche, dadurch g e k e n n z e i c h - n e t , daß die erste Heizeinrichtung (7;27) von im ersten Speicherbehälter (1;23) gespeicherter Flüssigkeit (2) wärmemäßig isoliert ist, daß die zu erwärmende Flüssigkeit der Heizeinrichtung (7;27) zuführbar und von dieser in den ersten Speicherbehälter (1;23) zur Speicherung nur dann abgebbar ist, wenn ihre Erwärmungstemperatur mindestens gleich einer zweiten Solltemperatur ist.

7. Einrichtung nach Anspruch 6 , dadurch g e k e n n - z e i c h n e t , daß ein zweiter Speicherbehälter (22) vorgesehen ist, dem die von der Heizeinrichtung (27) erwärmte Flüssigkeit zuführbar ist, wenn die Erwärmungstemperatur niedriger als die erste Solltemperatur und mindestens gleich einer zweiten Solltemperatur ist.

8. Einrichtung nach Anspruch 7 , dadurch g e k e n n - z e i c h n e t ; daß die Heizeinrichtung (7;27) über eine in den Speicherbehälter (1;23) mündende Rohrleitung (3) mit diesem verbunden ist, durch die erwärmte Flüssigkeit dem Speicherbehälter (1;23) zuführbar ist und daß in der Rohrleitung (3) ein erster Schieber (6;26) vorgesehen ist, der nur dann geöffnet ist, wenn die Erwärmungstemperatur der Flüssigkeit mindestens gleich einer ersten Solltemperatur ist.

9. Einrichtung nach Anspruch 7 oder 8, dadurch g e - k e n n z e i c h n e t , daß der zweite Speicherbehälter (22) mit der Heizeinrichtung (27) über eine Rückführleitung (36) verbunden ist, durch die im zweiten Speicherbehälter (22) gespeicherte Flüssigkeit zur weiteren Erwärmung der Heizeinrichtung (27) zuführbar ist.

10. Einrichtung nach mindestens einem der Ansprüche 6 bis 9, dadurch g e k e n n z e i c h n e t , daß die Heizeinrichtung ein vorzugsweise nach dem Gegenstromprinzip arbeitender Wärmetauscher (7;27) ist, der von einem wärmeabgebenden Fluid durchströmbar ist, welches in einem Sonnenkollektor erwärmbar ist.

wärmungstemperatur niedriger als die erste und mindesten gleich
einer zweiten Solltemperatur ist , die niedriger als die erste
Solltemperatur ist. Ein besonderer Vorteil bei dieser Weiterbildung liegt darin, daß, wenn beispielsweise die zu erwärmende
Flüssigkeit durch Sonnenenergie erwärmt wird, unter Umständen
die zur Verfügung stehende Sonnenenergie nicht ausreicht, die
Flüssigkeit auf die erste Solltemperatur zu erwärmen. Es wird
also auch die geringere Sonnenenergie ausgenutzt, indem die
Flüssigkeit mindestens bis auf die zweite Solltemperatur erwärmt wird.

Eine anderen vorteilhaften Weiterbildung der Erfindung entsprechend kann die auf mindestens die zweite Solltemperatur
erwärmte und in dem zweiten Speicherbehälter gespeicherte
Flüssigkeit wieder der Heizeinrichtung zur weiteren Erwärmung
zugeführt werden. Wenn die aufgrund der weiteren Erwärmung
erreichte Temperatur über der ersten Solltemperatur liegt,
so wird die weiter erwärmte Flüssigkeit dem ersten Speicherbehälter zugeführt.

Das erfindungsgemäße Verfahren kann bei vielen verschiedenen
Arten von Flüssigkeiten angewandt werden. Besonders geeignet
ist das erfindungsgemäße Verfahren zur Erzeugung von Brauchwasser in Haushalten. Jedoch können auch technische Flüssigkeiten wie z.B. Öle, Laugen und Lösungsmittel erwärmt werden.
Auch eignet sich das erfindungsgemäße Verfahren zum Erwärmen
flüssiger Nahrungsmittel, z.B. von Milch bei der Käseherstellung.

In bezug auf die Vorrichtung wird die Aufgabe erfindungsgemäß
durch die im Kennzeichen des Anspruches 6 angegebenen Merkmale gelöst.

In vorteilhafter Weise wird bei der erfindungsgemäßen Vorrichtung erreicht, daß die in dem Speicherbehälter gespeicherte Flüssigkeit stets eine Temperatur aufweist, die
mindestens gleich der ersten Solltemperatur ist. Wird dem
Speicherbehälter Flüssigkeit entnommen, so verringert sich
die in dem Speicherbehälter gespeicherte Flüssigkeitsmenge
entsprechend, wenn nicht gleichzeitig auf mindestens die
erste Solltemperatur erwärmte Flüssigkeit zugeführt wird.
Die Temperatur der gespeicherten Flüssigkeit kann, wenn von
Wärmeverlusten abgesehen wird, nicht unter den Wert der ersten
Solltemperatur sinken, da keine Flüssigkeit mit einer Temperatur
unter dieser Solltemperatur zugeführt wird.

Die Heizeinrichtung zum Erwärmen der zu erwärmenden Flüssigkeit kann nach der Erfindung als ein Wärmetauscher ausgebildet
sein, dem Sonnenenergie zugeführt wird, die als Wärmeenergie
an die zu erwärmende Flüssigkeit abgegeben wird. Als Wärmetauscher
ist ein solcher besonders geeignet, der von einem wärmeabgebenden
Fluid und der zu erwärmenden Flüssigkeit durchströmt wird. Bevorzugt wird ein geschlossener Strömungskreislauf für das wärmeabgebende Fluid vorgesehen, wobei in den Kreislauf ein Sonnenkollektor geschaltet ist, in dem das wärmeabgebende Fluid erwärmt wird.

Der besondere Vorteil in der Ausbildung des Wärmetauschers
als ein nach dem Gegenstromprinzip arbeitender Wärmetauscher
soll für den Fall kurz erläutert werden, daß es sich bei der
zu erwärmenden Flüssigkeit um Brauchwasser für einen Haushalt
handelt. Die Eintrittstemperatur des kalten Wassers liegt bei
ungefähr 14°C. Wenn angenommen wird, daß die erste Solltemperatur
bei 40°C liegt, so ergibt sich eine Temperaturdifferenz von 26°C.
Entsprechende Verhältnisse ergeben sich auch für das wärmeabgebende Fluid. Wie es aus der Theorie des Carnot'schen-Kreisprozesses bekannt ist, ist der Nutzeffekt der Temperaturdifferenz
direkt und zu der höheren Temperatur umgekehrt proportional.

Bei einer bekannten Vorrichtung zur Erzeugung von warmem
Brauchwasser, welches unter Verwendung von Sonnenenergie
erwärmt werden soll, ist ein Wärmetauscher im Speicherbehälter angeordnet und steht mit der sich im Speicherbehälter befindenden Flüssigkeit in wärmeleitendem Kontakt.
Wenn der Speicherbehälter mit kaltem Wasser von einer
Temperatur von 14°C gefüllt wird und mit dem Erwärmen des
kalten Wassers begonnen wird, wird zu Beginn des Erwärmungsvorganges der gleiche Nutzeffekt wie beim Erfindungsgegenstand erreicht. Mit zunehmender Erwärmung des im Speicherbehälter gespeicherten Wassers nimmt der Nutzeffekt jedoch
ab, da die Temperaturdifferenz zwischen Eintrittstemperatur
und Austrittstemperatur des durch den Wärmetauscher strömenden,
wärmeabgebenden Fluids abnimmt.

Die im Zusammenhang mit der Erläuterung des erfindungsgemäßen Verfahrens angegebenen Vorteile werden auch in analoger
Weise mit der erfindungsgemäßen Vorrichtung erzielt.

Vorteilhafte Weiterbildungen des Erfindungsgegenstandes sind
in den Unteransprüchen angegeben.

Der Erfindungsgegenstand wird im folgenden unter Bezugnahme
auf die Zeichnungen näher erläutert. Es zeigen:

Fig. 1     eine erste Ausführungsform einer Vorrichtung nach
           der Erfindung, insbesondere zur Durchführung des
           erfindungsgemäßen Verfahrens, und
Fig. 2     eine zweite Ausführungsform einer Vorrichtung nach
           der Erfindung, insbesondere zur Durchführung des
           erfindungsgemäßen Verfahrens.

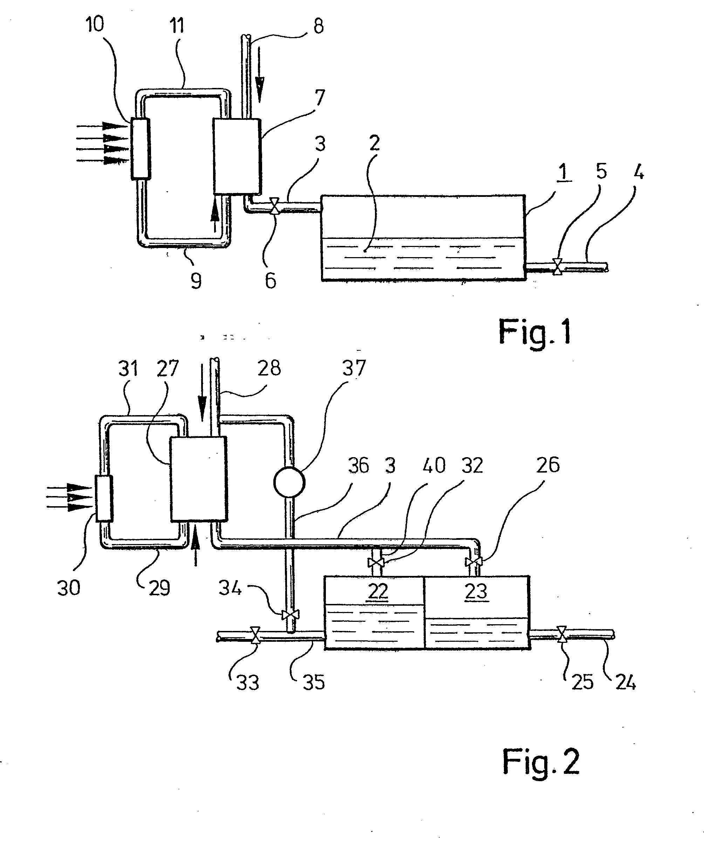

Fig. 1 zeigt einen Speicherbehälter 1, in dem eine erwärmte Flüssigkeit 2 gespeichert ist. Im unteren Bereich des Speicherbehälters 1 befindet sich eine Auslaufleitung 4, in der ein Ventil 5 angeordnet ist. Das Ventil 5 kann wahlweise geöffnet und geschlossen werden.

Eine Heizeinrichtung 7, die als Wärmetauscher ausgebildet ist, weist eine erste und eine zweite Durchlaufleitung auf, die voneinander getrennt sind, jedoch miteinander so verbunden sind, daß zwischen ihnen eine gute Wärmeleitung besteht. Die beiden Durchlaufleitungen sind nicht dargestellt. Eine Speiseleitung 8 ist mit dem Einlaß der ersten Durchlaufleitung verbunden. Der Auslaß der ersten Durchlaufleitung ist mit einer Zulaufleitung 3 verbunden, welche in den Speicherbehälter 1 mündet. In der Zulaufleitung 3 ist ein wahlweise zu öffnendes Ventil 6 angeordnet.

Ein Sonnenkollektor 10 ist über eine Rohrleitung 9 mit dem Einlaß der zweiten Durchlaufleitung der Heizeinrichtung 7 verbunden, während der Auslaß der zweiten Durchlaufleitung über eine Rohrleitung 11 mit dem Sonnenkollektor 10 verbunden ist. Der Sonnenkollektor 10, die zweite Durchlaufleitung der Heizeinrichtung 7 und die beiden Rohrleitungen 9 und 11 sind so miteinander verbunden, daß sich ein geschlossener Strömungskreislauf für ein in ihnen enthaltenes, wärmeabgebendes Fluid ergibt.

Die Arbeitsweise der in Fig. 1 dargestellten, erfindungsgemäßen Einrichtung wird im folgenden erläutert. Es sei angenommen, daß das in der Zulaufleitung 3 vorgesehene Ventil 6 geschlossen und der Speicherbehälter 1 bis etwa zur Hälfte mit erwärmter Flüssigkeit 2 gefüllt ist. Wenn erwärmte
Flüssigkeit benötigt wird, wird das sich in der Auslaufleitung 4 befindende Ventil 5 solange geöffnet, bis die
erwünschte Menge an erwärmter Flüssigkeit aus dem Speicherbehälter 1 ausgeflossen ist. Die Höhe des Flüssigkeitsstandes
nimmt im Speicherbehälter 1 ab, da das Ventil 6 geschlossen
ist und durch die Zulaufleitung 3 keine Flüssigkeit in den
Speicherbehälter gelangen kann.

Für den erforderlichen Druckausgleich im Inneren des Speicherbehälters 1 sind bekannte, nicht dargestellte Druckausgleichsmittel vorgesehen, damit die Strömungsgeschwindigkeit der
Flüssigkeit in der Auslaufleitung 4 bei geöffnetem Ventil 5
im wesentlichen konstant ist.

Der Sonnenkollektor 10 ist so angeordnet, daß er mit Sonnenstrahlung beaufschlagt werden kann. Es sei nun angeommen,
daß nur eine geringe Strahlungsmenge der Sonnenenergie auf
den Sonnenkollektor 10 auftrifft, da der Himmel bewölkt ist.
Das sich in dem Sonnenkollektor 10 befindende wärmeabgebende
Fluid wird erwärmt und durch eine nichtdargestellte Fördereinrichtung, wie z.B. eine Pumpe durch die Rohrleitung 9
zur Heizeinrichtung 7 transportiert. Da für das wärmeabgebende Fluid ein Strömungskreislauf vorgesehen ist, wird
gleichzeitig Fluid aus der Rohrleitung 11 in den Sonnenkollektor 10 und sich in der zweiten Durchlaufleitung der
Heizeinrichtung 7 befindendes Fluid in die Rohrleitung 11
gefördert, während erwärmtes, wärmeabgebendes Fluid aus der
Rohrleitung 9 in die zweite Durchlaufleitung der Heizeinrichtung
7 gelangt. Das erwärmte, wärmeabgebende Fluid gibt in der Heizeinrichtung 7, die als Wärmetauscher ausgebildet ist, Wärme

an die sich in der ersten Durchlaufleitung befindende, zu
erwärmende Flüssigkeit ab. Dadurch erhöht sich die Temperatur
der sich in der zweiten Durchlaufleitung befindenden Flüssigkeit. Wenn die Temperatur, auf die die Flüssigkeit in der zweiten
Durchlaufleitung erwärmt worden ist, eine vorgegebenen Solltemperatur nicht erreicht,    , so bleibt das sich in der
Zulaufleitung 3 befindende Ventil geschlossen.

Dieses Ventil 6 kann ein temperaturabhängiges, sich selbsttätig steuerndes Ventil sein, welches sich öffnet, wenn eine
vorbestimmte Temperatur    erreicht    wird. Das Ventil 6 kann
beispielsweise auch als ein Magnetventil ausgebildet sein,
welches mit einer Steuereinrichtung verbunden ist, die die
zum Öffnen des Ventils erforderliche elektrische Energie
nur dann liefert, wenn die durch die Heizeinrichtung 7 erwärmte Flüssigkeit als Temperatur zumindest die vorbestimmte
Solltemperatur aufweist. Durch einen in der Heizeinrichtung
angeordneten und mit der Steuereinrichtung verbundenen Wärmefühler kann die Temperaturinformation an die Steuereinrichtung
gegeben werden.

Reicht die bei bedecktem Himmel von dem Sonnenkollektor 10
aufgenommene Strahlungsenergie der Sonne, die über das
wärmeabgebende Fluid der sich in der ersten Durchlaufleitung
der Heizeinrichtung 7 befindenden Flüssigkeit in Form von
Wärmeenergie zugeführt wird, nicht aus, die Flüssigkeit auf
eine Temperatur zu erwärmen, die gleich der vorbestimmten Solltemperatur  ist, so bleibt das Ventil 6 geschlossen.

Ändert sich nun die Wetterlage, so daß eine größere Strahlungsmenge auf den Sonnenkollektor 10 auftrifft, wodurch eine größere
Wärmemenge an die zu erwärmende Flüssigkeit abgegeben werden
kann, so wird die sich in der zweiten Durchlaufleitung der
Heizeinrichtung 7 befindende Flüssigkeit auf eine höhere
Temperatur erwärmt. Sobald diese Erwärmungstemperatur die
vorbestimmte Solltemperatur erreicht hat, wird das Ventil 6
geöffnet, so daß erwärmte Flüssigkeit durch die Zulaufleitung 3 in den Speicherbehälter 1 fließt. Durch die Speiseleitung 8 gelangt weitere, zu erwärmende Flüssigkeit in die
zweite Durchlaufleitung in der Heizeinrichtung 7 und wird
dort erwärmt. Solange die Erwärmungstemperatur über der vorbestimmten Solltemperatur liegt, bleibt das Ventil 6 geöffnet,
so daß dem Speicherbehälter 1 fortlaufend erwärmte Flüssigkeit zugeführt wird, deren Temperatur zumindest gleich der
vorbestimmten Solltemperatur ist.

Wenn dieses erwünscht ist, können zusätzliche Steuermittel
vorgesehen sein, die den Zulauf zu dem Speicherbehälter 1
unterbrechen, wenn dieser vollkommen gefüllt worden ist.

Ein besonders guter Nutzeffekt wird mit der erfindungsgemäßen
Einrichtung erzielt, wenn die als Wärmetauscher ausgebildete
Heizeinrichtung 7 nach dem Gegenstromprinzip arbeitet, da
dadurch die Differenz zwischen der Eintrittstemperatur und
der Austrittstemperatur des wärmeabgebenden Fluids am Wärmetauscher besonders groß ist.

Bei der erfindungsgemäßen Einrichtung ist sichergestellt,
daß die sich im Speicherbehälter 1 befindende Flüssigkeit 2
stets eine Temperatur aufweist, die zumindest gleich der vorbestimmten Solltemperatur ist. Solange nur überhaupt
Flüssigkeit im Speicherbehälter 1 gespeichert ist, steht
diese mit zumindest der Solltemperatur zur weiteren Verwendung zur Verfügung.

Anhand der Figur 2 wird eine zweite Ausführungsform einer
erfindungsgemäßen Einrichtung im folgenden beschrieben.
Statt eines einzigen Speicherbehälters 1 wie bei der in
Fig. 1 dargestellten Einrichtung, sind hier ein erster und
ein zweiter Speicherbehälter 23 bzw. 22 vorgesehen. Die
beiden Speicherbehälter sind sowohl gegeneinander als auch
gegenüber der Umgebung wärmeisoliert. Der erste Speicherbehälter 23 ist in seinem unteren Bereich strömungsmäßig
mit einer Auslaufleitung 24 verbunden, in der ein wahlweise
zu öffnendes und zu schließendes Ventil 25 angeordnet ist.
In den unteren Bereich des zweiten Speicherbehälters 22
mündet eine Auslaufleitung 35, in der ein wahlweise zu
öffnendes und zu schließendes Ventil 33 angeordnet ist.
Wenn die Ventile 25 bzw. 33 geöffnet werden, so kann über
die Auslaufleitungen 24 bzw. 35 den beiden Speicherbehältern
23 bzw. 25 die sich in ihnen befindende Flüssigkeit entnommen
werden.

Es ist eine Heizeinrichtung 27, die als Wärmetauscher ausgebildet ist, vorgesehen. Diese Heizeinrichtung 27 weist
den gleichen Aufbau auf, wie die Heizeinrichtung 7 bei der
in Fig. 1 dargestellten Ausführungsform. Infolgedessen wird
hier auf eine nähere Beschreibung verzichtet. Der Auslaß
der ersten Durchlaufleitung ist mit dem einen Ende einer
Zulaufleitung 3 verbunden, deren anderes Ende in den ersten Speicherbehälter 23 mündet. Ein Ventil 26 ist in dieser Zulaufleitung 3 vorgesehen, durch welche der Strömungsdurch - tritt durch die Zulaufleitung 3 wahlweise ermöglicht oder verhindert werden kann. Zwischen der Heizeinrichtung 27 und dem Ventil 26 weist die Zulaufleitung 3 eine Abzweigungsleitung 40 auf, die in den zweiten Speicherbehälter 22 mündet. In der Abzweigungsleitung 40 ist ein wahlweise zu öffnendes und zu schließendes Ventil 32 angeordnet, um den Strömungsdurchtritt durch die Abzweigungsleitung 40 freizugeben oder zu unterbinden.

Die Auslaufleitung 35 ist zwischen dem zweiten Speicher- hälter 22 und dem Ventil 33 mit einer Abzweigungsleitung 36 verbunden, welche zu einer Speiseleitung 28 führt und mit dieser verbunden ist. In der Abzweigungsleitung 36 sind ein wahlweise zu öffnendes und zu schließendes Ventil 34 und eine Förderpumpe 37 vorgesehen.

Ebenso wie bei der in Fig. 1 dargestellten Einrichtung ist hier ein Sonnenkollektor 30 vorgesehen, welcher über Rohr- leitungen 29 und 31 mit der zweiten Durchlaufleitung der Heizeinrichtung 27 zu einem geschlossenen Strömungskreislauf verbunden ist. In diesem Kreislauf befindet sich ein wärmeabgebendes Fluid, beispielsweise eine Sole.

Die sich in der Zulaufleitung 3 und der Abzweigungsleitung 40 befindenden Ventile 26 bzw. 32 werden in folgender Weise gesteuert. Das Ventil 26 wird geöffnet, wenn die Erwärmungstemperatur der von der Heizeinrichtung 27 erwärmten Flüssig - keit einen ersten Solltemperaturwert erreicht. Das in der Abzweigungsleitung 40 vorgesehene Ventil 32 wird nur dann geöffnet, wenn die Erwärmungstemperatur der Flüssigkeit niedriger als die erste Solltemperatur und mindestens
gleich einer zweiten Solltemperatur ist, die niedriger als
die erste Solltemperatur ist.

Im folgenden wird die Arbeitsweise der zweiten Ausführungsform beschrieben. Die Erwärmung der zu erwärmenden Flüssigkeit mittels der als Wärmetauscher ausgebildeten Heizeinrichtung 27 geschieht in der gleichen Weise wie bei der
in Fig. 1 dargestellten Ausführungsform, nämlich indem Wärme
von dem wärmeabgebenden Fluid an diese erwärmte Flüssigkeit
abgegeben wird. Es sei angenommen, daß sowohl der erste als
auch der zweite Speicherbehälter 23 bzw. 22 leer sind. Ferner
soll das Ventil 34 geschlossen sein. Wenn die Erwärmungstemperatur der in der Heizeinrichtung 27 erwärmten Flüssigkeit
über der ersten Solltemperatur liegt, wird das Ventil 26
geöffnet und die erwärmte Flüssigkeit fließt in den ersten
Speicherbehälter 23 ein.

Wenn die Temperatur der in der Heizeinrichtung 27 erwärmten
Flüssigkeit niedriger als die erste Solltemperatur aber zumindest
gleich der zweiten Solltemperatur ist, wird das Ventil 32
geöffnet und die erwärmte Flüssigkeit fließt in den zweiten
Speicherbehälter 22. Da das Ventil 26 geschlossen ist, kann
keine Flüssigkeit in den ersten Speicherbehälter 23 gelangen.
Auf diese Weise wird in dem ersten Speicherbehälter 23 eine
Flüssigkeit gespeichert, die mindestens die erste Solltemperatur aufweist. Im zweiten Speicherbehälter 22 wird
Flüssigkeit mit einer Temperatur gespeichert, die niedriger
als die erste und jedoch mindestens gleich der zweiten Solltemperatur ist. Durch Öffnen

der Ventile 25 und 33 kann den jeweiligen Speicherbehältern
22 und 23 erwärmte, gespeicherte Flüssigkeit entnommen werden.

Bei der in Fig. 2 gezeigten Ausführungsform ist die Abzweigungsleitung 36 aus folgendem Grund vorgesehen. Wenn
das in der Abzweigungsleitung 36 vorgesehene Ventil 34 geöffnet
und die ebenfalls vorgesehene Pumpe 37 eingeschaltet wird, so
kann sich im zweiten Speicherbehälter 22 befindende Flüssigkeit
zur Einlaßöffnung der ersten Durchlaufleitung in der Heizeinrichtung 27 gefördert werden. Beim Durchfließen der dem
zweiten Speicherbehälter 22 entnommenen Flüssigkeit durch die
Heizeinrichtung 27 kann diese weiter erwärmt werden und zwar
gegebenenfalls auf eine Temperatur die über der ersten Solltemperatur liegt. In diesem Fall wird, wenn die Temperatur
der erwärmten Flüssigkeit über der ersten Solltemperatur liegt,
das Ventil 26 geöffnet, so daß die erwärmte Flüssigkeit in
den ersten Speicherbehälter 23 fließt. Hat die Erwärmungstemperatur jedoch noch nicht die erste Solltemperatur erreicht, so fließt die Flüssigkeit zurück in den zweiten
Speicherbehälter 22, da nun das Ventil 32 geöffnet ist.
Dadurch ist es möglich, durch schrittweises Zuführen von
Wärmemengen, die Temperatur der gespeicherten Flüssigkeit
zu erhöhen.

Zweckmäßigerweise sind in Übereinstimmung mit der Erfindung
verschiedene Steuereinrichtungen vorgesehen, um die verschiedenen Ventile in Abhängigkeit von den gerade vorliegenden
Verhältnissen zu steuern. Wenn beispielsweise der erste Speicherbehälter 23 voll mit erwärmter Flüssigkeit gefüllt ist und eine
ausreichende Wärmeenergie zur Verfügung steht, um mittels der Heizeinrichtung 27 noch weitere Flüssigkeit auf eine über
der Solltemperatur liegende Temperatur zu erwärmen, so wird
das Ventil 32 geöffnet, um diese Flüssigkeit in dem zweiten
Speicherbehälter 22 speichern zu können.

Ferner können mit Temperaturfühlern zusammenwirkende Steuereinrichtungen vorgesehen sein, durch die die Pumpe 37 und
das Ventil 34 nur dann betätigt werden, wenn für die dem
zweiten Speicherbehälter 22 entnommene Flüssigkeit die Erwärmung auf eine Temperatur zu erwarten ist, die um einen
vorbestimmten Wert über der Temperatur der im zweiten Speicherbehälter 22 gespeicherten Flüssigkeit liegt.

Sowohl bei der in Fig. 1 als auch bei der in Fig. 2 dargestellten Ausführungsform nach der Erfindung, bei denen Sonnenenergie zum Erwärmen der zu erwärmenden Flüssigkeit eingesetzt
wird, kann eine zusätzliche Heizeinrichtung vorgesehen werden,
durch die eine zusätzliche Wärmemenge der zu erwärmenden Flüssigkeit zugeführt werden kann, wenn die durch Sonnenenergie gewonnene Wärmemenge nicht ausreicht, um die Flüssigkeit auf
eine über der ersten Solltemperatur liegende Temperatur zu
erwärmen. Die zusätzliche Heizeinrichtung würde eingeschaltet
werden, wenn beispielsweise der Himmel teilweise bewölkt ist.
Die zusätzliche Heizeinrichtung kann Teil der Heizeinrichtungen
7 und 27 sein oder aber sie kann auch unabhängig von diesen
Heizeinrichtungen vorgesehen werden.

Für den Fall, daß der bzw. die Speicherbehälter tiefer als
die Stelle liegen, an der erwärmte Flüssigkeit benötigt wird,
kann in die Auslaufleitung der jeweiligen Speicherbehälter eine Pumpe eingebaut werden. Eine andere Möglichkeit besteht darin, daß in den Speicherbehältern ein Überdruck durch Zuführen von Druckluft hervorgerufen wird.

Es ist auch möglich, die Heizeinrichtung innerhalb des Speicherbehälters derart anzuordnen, daß diese wärmemäßig gegenüber der in dem Speicherbehälter zu speichernden Flüssigkeit isoliert ist. Wenn beispielsweise die Heizeinrichtung im Bodenbereich angeordnet ist, so könnte sich die Austrittsöffnung der Heizeinrichtung für die erwärmte Flüssigkeit ebenfalls im Bodenbereich des Speicherbehälters befinden.

Aus den vorhergehenden Ausführungen folgt somit, daß der wesentliche Gedanke bei dem Verfahren und der Einrichtung nach der Erfindung darin besteht, daß, wenn der erste Speicherbehälter nicht vollkommen gefüllt ist, das von der erwärmten Flüssigkeit in dem Speicherbehälter nicht ausgefüllte Volumen durch ein gasförmiges Fluid, im allgemeinen Luft, ausgefüllt wird. Entsprechendes gilt auch für die Verhältnisse, wenn ein zweiter Speicherbehälter vorgesehen ist. Bei Speicherbehältern nach dem Stand der Technik, bei denen stets bei Entnahme eines Flüssigkeitsvolumens ein gleiches Flüssigkeitsvolumen mit kälterer Flüssigkeit dem Speicherbehälter zugeführt wird, steht die in dem Speicherbehälter vorhandene Flüssigkeit, wenn diese Flüssigkeit Wasser ist, unter dem gleichen Druck wie das Wasser in einem üblichen Versorgungsnetz. Um auch beim Gegenstand der Erfindung eine ausreichend hohe Ausströmgeschwindigkeit aus dem Speicherbehälter zu erhalten, kann, wie es im Rahmen der Erfindung vorgesehen sein kann, das in dem Speicherbehälter jeweils vorhandene gasförmige Fluid, beispielsweise die Luft, unter einem vorbestimmten Druck stehen. Andererseits ist es auch im Rahmen der Erfindung möglich, eine Pumpe vorzusehen, durch die in dem jeweiligen Speicherbehälter
enthaltene Flüssigkeit dem Verbraucher zugeführt wird.

PATENTANWALT
DR. MANNO BOTT-BODENHAUSEN
DIPLOM-PHYSIKER
licencié en droit d. Universität Genf

011102

Telefon 089/22 28 62

blu-01- EU

Verfahren und Einrichtung zum Erwärmen
und Speichern einer Flüssigkeit.


P a t e n t a n s p r ü c h e


1. Verfahren zum Erwärmen und Speichern einer Flüssigkeit, insbesondere von Brauchwasser, bei dem die Flüssigkeit erwärmt sowie in einen ersten Speicherbehälter gespeichert wird, dem sie bei Bedarf entnommen wird, dadurch g e k e n n - z e i c h n e t , daß die Flüssigkeit wärmeleitungsmäßig von sich in dem ersten Speicherbehälter befindender Flüssigkeit getrennt erwärmt und zur Speicherung dem ersten Speicherbehälter nur dann zugeführt wird, wenn ihre Erwärmungstemperatur mindestens gleich einer ersten Solltemperatur ist.

2. Verfahren nach Anspruch 1, dadurch g e k e n n z e i c h - n e t , daß die erwärmte Flüssigkeit einem zweiten Speicherbehälter zugeführt wird, wenn ihre Erwärmungstemperatur niedriger als die erste und mindestens gleich einer zweiten Solltemperatur ist, welche niedriger als die erste Solltemperatur ist.

3. Verfahren nach Anspruch 2, dadurch g e k e n n z e i c h - n e t , daß die in dem zweiten Speicherbehälter enthaltene Flüssigkeit diesem entnommen und darauffolgend weiter erwärmt wird und daß diese entnommene und weiter erwärmte Flüssigkeit dem ersten Speicherbehälter zugeführt wird, wenn die Temperatur der weiter erwärmten Flüssigkeit mindestens gleich der ersten Solltemperatur ist.

4. Verfahren nach mindestens einem der Ansprüche 1 bis 3, dadurch g e k e n n z e i c h n e t , daß die Flüssigkeit und/oder die dem zweiten Speicherbehälter zur weiteren Erwärmung entnommene Flüssigkeit in einem Wärmetauscher erwärmt wird.

5. Verfahren nach mindestens einem der Ansprüche 1 bis 4, dadurch g e k e n n z e i c h n e t , daß die Flüssigkeit und/oder die dem zweiten Speicherbehälter zur weiteren Erwärmung entnommene Flüssigkeit durch Sonnenenergie erwärmt wird.

daß die beim Stand der Technik bekannten Schwierigkeiten nicht auftreten.

Diese Aufgabe wird in Hinblick auf das Verfahren durch die im Kennzeichen des Anspruches 1 angegebenen Merkmale gelöst.

Bei dem erfindungsgemäßen Verfahren wird die zu erwärmende Flüssigkeit zunächst auf eine vorbestimmte Temperatur erwärmt und anschließend dem Speicherbehälter zugeführt, in dem sie gespeichert wird. Die sich in dem Speicherbehälter befindende Flüssigkeit weist stets diese vorbestimmte Temperatur auf. Wenn der Speicherbehälter ausreichend gut wärmeisoliert ist, so wird die sich in ihm befindende Flüssigkeit die vorbestimmte Temperatur über einen sehr langen Zeitraum beibehalten. Wenn dem Speicherbehälter Flüssigkeit entnommen wird, so verringert sich die in ihm gespeicherte Flüssigkeitsmenge, jedoch nicht die Temperatur der gespeicherten Flüssigkeit, da bei der Flüssigkeitsentnahme nicht gleichzeitig Flüssigkeit zugeführt wird, deren Temperatur unter der Temperatur der gespeicherten Flüssigkeit liegt.

Als Heizeinrichtung kann prinzipiell jede beliebige Einrichtung verwandt werden, die dazu geeignet ist, eine Flüssigkeit zu erwärmen.

Von besonderem Vorteil ist es jedoch, wenn als Heizeinrichtung ein Wärmetauscher verwandt wird, dem Sonnenenergie zugeführt wird, welche an die zu erwärmende Flüssigkeit in Form von Wärmeenergie abgegeben wird. Besonders günstig ist es, wenn, wie es nach der Erfindung vorgesehen sein kann, ein geschlossener Strömungskreislauf für ein wärmeabgebendes Fluid vorgesehen wird, welches einen Sonnenkollektor durchströmt, in diesem erwärmt wird, und daraufhin einen Wärmetauscher durchströmt, in dem es die vom Sonnenkollektor aufgenommene Wärmemenge an die zu
erwärmende Flüssigkeit abgibt. Ein besonders hoher Wirkungsgrad
wird erzielt, wenn der Wärmetauscher nach dem Gegenstromprinzip
arbeitet, d.h. daß die Strömungsrichtung des Fluids und diejenige der zu erwärmenden Flüssigkeit in dem Wärmetauscher zu
einander entgegengesetzt gerichtet sind.

Gemäß der Erfindung ist es auch möglich, eine elektrische Heizeinrichtung zum Erwärmen der Flüssigkeit auf die vorbestimmte
Temperatur zu verwenden. Ein Vorteil ergibt sich insbesondere
dann, wenn die Heizeinrichtung normalerweise nur während einer
Zeitdauer betrieben werden soll, während der ein besonders
günstiger Stromtarif zur Verfügung steht. Wenn außerhalb dieser
Zeitdauer der Speicherbehälter vollkommen entleert worden ist,
jedoch auf die vorbestimmte Temperatur erwärmte Flüssigkeit
benötigt wird, so kann die Heizeinrichtung mit dem tariflich
ungünstigen Strom solange betrieben werden, bis eine erwünschte
Flüssigkeitsmenge auf die vorbestimmte Temperatur erwärmt worden
ist. Diese erwünschte Flüssigkeitsmenge mag beispielsweise nur
einem Viertel des Gesamtfassungsvermögens des Speicherbehälters
entsprechen. Bei dem herkömmlichen Vorgehen wäre es erforderlich,
eine Flüssigkeitsmenge zu erwärmen, die dem gesamten Fassungsvermögen des Speicherbehälters entspricht.

Gemäß einer vorteilhaften Weiterbildung können ein erster und
ein zweiter Speicherbehälter vorgesehen werden. Dem ersten
Speicherbehälter wird die erwärmte Flüssigkeit zur Speicherung
nur dann zugeführt, wenn ihre Erwärmungstemperatur mindestens gleich
einer ersten Solltemperatur ist. Dem zweiten Speicherbehälter
dagegen wird die erwärmte Flüssigkeit zugeführt, wenn ihre Er-

0111029

1/1

Fig.1

Fig.2

Europäisches
Patentamt

**EUROPÄISCHER RECHERCHENBERICHT**

Nummer der Anmeldung

EP 82 11 1542

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 006 210  (CIBA-GEIGY AG) * Seite 5, Absatz 3 - Seite 6, Absatz 2; Figur 1 * | 1,2,5, 6 | F 24 H    1/18 F 24 D   17/00 F 24 D   19/10 |
| | --- | | |
| A | DE-A-2 814 243 (RESOL-ELEKTRONISCHE REGELUNGEN GMBH) | | |
| | ----- | | |

| | RECHERCHIERTE SACHGEBIETE (Int. Cl. ³) |
|---|---|
| | F 24 D   11/00 F 24 D   17/00 F 24 D   19/00 F 24 H    1/00 |

Der vorliegende Recherchenbericht wurde für alle Patentansprüche erstellt.

| Recherchenort BERLIN | Abschlußdatum der Recherche 02-08-1983 | Prüfer PIEPER C |
|---|---|---|